(19) Europäisches Patentamt
European Patent Office
Office européen des brevets

(11) Publication number: **0 292 991 A2**

(12) # EUROPEAN PATENT APPLICATION

(21) Application number: 88108504.7

(51) Int. Cl.4: **B41M 5/24**

(22) Date of filing: 27.05.88

(30) Priority: 29.05.87 JP 131585/87
29.05.87 JP 131586/87
05.06.87 JP 139707/87

(43) Date of publication of application:
30.11.88 Bulletin 88/48

(84) Designated Contracting States:
DE FR GB

(71) Applicant: **CANON KABUSHIKI KAISHA**
30-2, 3-chome, Shimomaruko
Ohta-ku Tokyo(JP)

(72) Inventor: **Yuasa, Toshiya**
1-23-4 Inokashira
Mitaka-shi Tokyo(JP)
Inventor: **Fukumoto, Hiroshi**
1-12-5 Saginuma Miyamae-ku
Kawasaki-shi Kanagawa-ken(JP)
Inventor: **Kan, Fumitaka**
3-28-25 Haginaka Ohta-ku
Tokyo(JP)
Inventor: **Koizumi, Norihiko**
103-706 Ichibakamicho Tsurumi-ku
Yokohama-shi Kanagawa-ken(JP)
Inventor: **Tohyama, Noboru**
103, 4-2-11 Katahira Asao-ku
Kawasaki-shi Kanagawa-ken(JP)

(74) Representative: **Blumbach Weser Bergen Kramer Zwirner Hoffmann Patentanwälte**
Radeckestrasse 43
D-8000 München 60(DE)

(54) **Image recording ink.**

(57) A fluid ink which is substantially non-adhesive but can be imparted with an adhesiveness on application of an energy such as electrochemical energy or heat energy, is obtained by impregnating a crosslinked substance such as guar gum or polyvinyl alcohol compound with a liquid dispersion medium such as water. The fluid ink is supplied with a pattern of energy to be provided with an adhesive pattern, which is then transferred to a recording medium, such as plain paper, directly or by the medium of an intermediate transfer medium to form an ink pattern corresponding to the energy pattern applied. The ink has a viscoelasticity suitable for image formation and provides a transferred image of high quality without trailing or blurring.

EP 0 292 991 A2

# IMAGE RECORDING INK

## FIELD OF THE INVENTION AND RELATED ART

The present invention relates to an ink adapted to an image recording method which retains various advantages of the conventional recording systems and yet realizes a low recording cost.

In recent years, along with the rapid progress of information industries, various data processing systems have been developed, and accordingly various recording methods and recording apparatus have been developed and adopted for the respective data processing systems. Among these, representative recording systems capable of recording on plain paper include electrophotography and laser beam printing system developed therefrom, ink jetting, thermal transfer, and impact printing system using a wire dot printer or daisy-wheel printer.

The impact printing system produces annoying noise and the application thereof to full- or multi-color recording is difficult. The electrophotography and the laser beam printing produce images at a high resolution, but the apparatus therefor are complicated and large in size thus requiring a large apparatus cost. The ink jet printing system requires only a small expendable cost but involves a process defect that, because a thin nozzle is used for jetting a low-viscosity liquid ink therefrom, the nozzle is liable to be clogged with the ink solidified during a period of non-use. Further, as the ink for the ink jet system is low-viscosity ink, the ink is liable to spread after it is deposited on paper, thus resulting in blurring of images.

Further, according to the thermal transfer method, wherein a heat pattern was supplied to a solid ink layer formed on a sheet form support to form a fused ink pattern, which is then transferred to plain paper, etc., to form an image thereon. The thermal transfer method has advantages that a relatively small apparatus is used and therefore only a small apparatus cost is required. However, an ink ribbon used in the thermal transfer method is composed by forming a solid ink layer on an expensive support and the ink ribbon is disposed after use, so that the thermal transfer method involves a disadvantage that it requires a high expendable cost.

In order to remove the above disadvantage of the thermal transfer method, our research group has proposed a novel recording method which has solved the above-mentioned problems and realized a low recording cost (Japanese Patent Application No. 175191/1986, corresponding to U.S. Patent Application Serial No. 075,045).

This recording method comprising:

providing a fluid ink which is capable of forming a fluid layer, substantially non-adhesive and capable of being imparted with an adhesiveness on application of an energy,

forming a layer of the fluid ink on an ink-carrying member,

applying a pattern of the energy corresponding to a given image signal to the ink layer to form an adhesive pattern of the ink, and

transferring the adhesive pattern of the ink to a transfer-receiving medium to form thereon an ink pattern corresponding to the energy pattern applied.

Further, our research group has proposed on image recording ink for use in the above-mentioned image recording method (U.S. Patent Application Serial No. 156,978, corresponding to Japanese Patent Application Nos. 36904/1987, 15241/1988 and 15242/1988).

This image recording ink, comprising: a liquid dispersion medium, and a crosslinked substance impregnated with the liquid dispersion medium; the ink being capable of being imparted with an adhesiveness on application of an electric current; the ink containing an electrolyte capable of imparting a pH buffer action thereto.

Incidentally, there have been proposed substances having a structure similar to that of the ink used in the above-mentioned image recording method, e.g., in U.S. Patent Nos. 3,519,463; 4,548,734; and 4,549,907. However, these inks or substances do not satisfy conditions which are required for providing a clear image when used in the above novel image recording method.

## SUMMARY OF THE INVENTION

An object of the present invention is to provide an ink suitably used in an image recording method which has solved the above-mentioned problems of the conventional recording systems.

Another object of the present invention is to provide a type of ink which can be used up without

disposal as far as it has not been actually used for recording or without using an ink ribbon or ink sheet to be disposed after use as in the conventional thermal transfer system.

A further object of the present invention is to provide an ink which is not attached or transferred to an intermediate transfer medium or a recording medium (final transfer medium) when it only contacts such a medium and which can be used without being applied as a thin solid ink layer on a support unlike a solid ink held on a conventional ink ribbon or ink donor film.

A still further object of the present invention is to provide an ink improved in stability of performances during use.

A still further object of the present invention is to provide an ink excellent in a fluid layer-forming property which is an extremely important factor in the above-mentioned novel image recording method utilizing the control of ink adhesiveness, and can be supplied to an ink-carrying member such as a sleeve stably and easily through coating, i.e., an ink which not only shows good plastic behavior when applied onto the ink-carrying member but also shows elastic behavior suitable for image formation when transferred to a transfer-receiving medium under energy application.

According to the present invention, there is provided an image recording ink, comprising: a liquid dispersion medium, and a crosslinked substance impregnated with the liquid dispersion medium; the ink being capable of forming a fluid layer, substantially non-adhesive and capable of being imparted with an adhesiveness on application of an energy; the ink having a ratio ($G''/G'$) of a loss elasticity modulus ($G''$) to a storage elasticity modulus ($G'$) in the range of 0.1 - 10, when supplied with a sine strain having an angular velocity of 1 radian/sec.

Not only the image recording ink of the present invention shows a good coating characteristic on an ink-carrying member, but also a layer thereof including a portion supplied with a pattern of adhesiveness under energy application shows good elastic recovery between an ink-carrying member and a transfer-receiving medium. As a result, the ink of the present invention may provide a transferred image of high quality free of trailing, blurring, etc.

These and other objects, features and advantages of the present invention will become more apparent upon a consideration of the following description of the preferred embodiments of the present invention taken in conjunction with the accompanying drawings, wherein like reference numerals denote like parts. In the following description, "%" and "part(s)" representing a quantitative proportion or ratio are by weight unless otherwise noted specifically.

## BRIEF DESCRIPTION OF THE DRAWINGS

Figure 1A is a graph showing a relationship between a strain applied to an ink and a stress of the ink; Figure 1B is a schematic perspective view showing the shape of a sample ink holder for measuring the viscoelasticity of the ink;

Figures 2 and 3 are respectively a schematic sectional view of an apparatus for practicing a recording method using the image recording ink of the present invention;

Figure 4 is a perspective view of the recording apparatus shown in Figure 3; and

Figure 5 is an enlarged partial perspective view of a recording electrode used in the apparatus shown in Figure 2 or 3.

## DETAILED DESCRIPTION OF THE INVENTION

The image recording ink according to the present invention has a fluid layer-forming property but is substantially non-adhesive under to energy application, and capable of being imparted with an adhesiveness on application of an energy such as an electric energy. Further, the image recording ink of the present invention has a ratio ($G''/G'$)of a loss elasticity modulus $G''$ to a storage elasticity modulus $G'$ of 0.1 - 10, (preferably 0.2.- 5), when a sine strain having an angular velocity of 1 radian/sec (rad/sec) is imparted to the ink.

Herein, "fluid layer-forming property" refers to a property of the ink that it flows under application of a certain external force to form a layer or film thereof, e.g., on an ink-carrying member. Further, the term "adhesiveness" used herein is a selective one and refers to a property of the ink by which a portion of the ink contacting an object such as transfer-receiving medium is selectively separated or cut from the ink body to adhere to the object. Thus, the "adhesiveness" is not concerned with whether the ink body is glutinous or not.

If the above ratio ($G''/G'$) is less than 0.1, the ink insufficiently behaves as a plastic material whereby the ink is insufficiently applied onto an ink-carrying member, (or a uniform coating of the ink is difficult to be formed), and the applied ink layer is liable to be cut. Further, in this case, the fluidity of the ink becomes low, and smooth supply of the ink sometimes becomes difficult, or an operation such as heating is sometimes required in order to supply the ink, e.g., when an image recording apparatus as shown in Figure 2 is used.

On the other hand, if the ratio ($G''/G'$) is more than 10, the ink insufficiently behaves as an elastic material whereby the ink insufficiently causes an elastic recovery (or restoration) during a stage after an energy application step up to a transfer step of transferring to a transfer recording method. As a result, an image deformation such as trailing is liable to occur.

In the present invention, the above-mentioned storage elasticity modulus ($G'$) and loss elasticity modulus ($G''$) are defined as follows:

Referring to a graph of Figure 1A, when a sine strain $\gamma$ (t) represented by the following formula (1) is imparted to an ink,

$$\gamma(t) = \gamma_0 \exp(i\omega t) \quad (1),$$

($\omega$: angular velocity)

It is supposed that the ink in a stationary state, shows a stress change $\sigma$(t) represented by the following formula (2) with the elapse of time,

$$\sigma(t) + \sigma_0 \exp\{i(\omega t + \delta)\} \quad (2)$$

($\delta$: phase shift (lead) angle between the absolute amplitude of the stress and that of the strain)

In this case, a complex dynamic elasticity modulus $G^*(i\omega)$ is defined by the following formula (3);

$$G^*(i\omega) = \frac{\sigma(t)}{\gamma(t)} = G'(\omega) + iG''(\omega) \quad (3).$$

In the above formula (3), $G'(\omega)$ denotes a storage elasticity modulus and $G''(\omega)$ denotes a loss elasticity modulus. The unit of these moduli is, e.g., dyne/cm$^2$ (Shoten Oka, "Introduction to Rheology", pp. 140 - 142, published by Kogyo Chosa-Kai).

More specifically, in the present invention, the storage elasticity modulus ($G'$) and the loss elasticity modulus ($G''$) may be determined in the following manner.

Referring to a schematic perspective view of Figure 1B, a sample ink is formed into a disk shape having a diameter of 25 mm and a thickness of 2 mm, and is loaded in Rheometer RMS-800 (mfd. by Rheometrics Inc., USA). A sine strain $\gamma$(t) represented by the above formula (1) with an angular velocity of 1 rad/sec is applied to the sample in a direction (shear direction) as shown by an arrow in Figure 1B at 25°C, and a stress $\sigma$(t) and $\delta$ (phase lead angle between the absolute amplitude of the stress $\sigma$(t) and that of the strain $\gamma$(t)) are determined by the above formula (2). As a result, the above-mentioned ratio ($G''/G'$) of the loss elasticity modulus ($G''$) to the storage elasticity modulus ($G'$) may be determined by the following formula (4):

$$G''/G' = \tan\delta \quad (4).$$

Incidentally, the above-mentioned angular velocity $\omega$ = 1 rad/sec and the disk thickness (2 mm) of the sample ink have been selected so that they substantially correspond to a desirable moving velocity of an ink-carrying member and a desirable thickness of an ink layer to be formed on the ink-carrying member used in an image recording method using the ink of the present invention.

The ink of the present invention having the above-mentioned viscoelasticity characteristic invention may preferably have the following non-adhesiveness under no energy application and/or the following viscosity (or fluidity) under energy application.

(1) Non-adhesiveness (or liquid dispersion medium-retaining property)

On the surface of a sample ink held in a container, an aluminum foil of 5 cm x 5 cm in size is, after being accurately weighed, placed gently and is left standing at it is for 1 min in an environment of a temperature of 25°C and a moisture of 60 %. Then, the aluminum foil is gently peeled off from the surface of the ink and then quickly weighed accurately to measure the increase in weight of the aluminum foil.

Through the measurement, the ink of the present invention should preferably show substantially no transfer of its cross-linked substance and a weight increase of the aluminum foil of less than 1000 mg, particularly on the order of 1 - 100 mg. In the above measurement, it is possible to separate the aluminum foil from the ink body, if necessary, with the aid of a spatula.

If the non-adhesiveness of the ink is insufficient in the light of the above standard, not only the liquid component but also the ink per se can transfer to a transfer-receiving medium to a practically non-negligible extent even under no current application, thus resulting in a lower image quality. Further, in the case, a relatively large amount of the liquid dispersion medium can be transferred to the transfer-receiving medium, whereby the dispersion medium is difficult to be removed.

(2) Fluidity under energy application

In an embodiment of the ink according to the present invention which is capable of being imparted with an adhesiveness on application of a heat energy, it is preferred that the ink is converted from a gel state into a sol state under the application of heat energy. In such case, the ink of the present invention in a heated state (e.g., at a transition temperature at which a gel-sol change occurs) may preferably have a viscosity of 10 centipoises (cps) or above, more preferably 100 cps or above, measured by means of a Hoepler viscometer. If the above-mentioned viscosity measured by the Hoepler viscometer is below 10 cps, an ink pattern or a transferred image is liable to cause trailing on a transfer-receiving medium such as an intermediate transfer medium or a recording medium (final transfer medium).

On the other hand, in an embodiment of the ink according to the present invention which is capable of being imparted with an adhesiveness on application of an electrochemical energy, it is preferred that the viscosity of the ink is measured by converting the ink into a state similar to that imparted with an adhesiveness at the time of image formation. In such case, an acid may be added to an ink capable of causing a gel-sol change in the vicinity of an anode. On the other hand, an alkali may be added to an ink capable of causing a gel-sol change in the vicinity of a cathode.

More specifically, 0.1N-hydrochloric acid (or 0.1N-aqueous NaOH solution) is added to 50 g of the image recording ink of the present invention until the entire ink is converted into a sol state (ordinarily, in an amount of about 0.2 - 5 cc). Similarly as in the case of the ink adapted to heat energy application, the ink of the present invention in such sol state may preferably have a viscosity of 10 centipoises (cps) or above, more preferably 100 cps or above, measured by means of a Hoepler viscometer at 25 °C. If the above-mentioned viscosity is below 10 cps, an ink pattern or a transferred image is liable to cause trailing on a transfer-receiving medium.

Incidentally, in the above-mentioned case where the ink is coverted into a sol state by adding an acid or alkali thereto, in an ink containing an electrolyte capable of imparting a pH buffer action thereto (e.g., the ink proposed by our research group in Japanese Patent Application No. 36904/1987 corr. to U.S. Patent Application Serial No. 156,978), a somewhat larger amount of the acid or alkali is required in order to completely convert such ink into a sol state.

The ink of the present invention having the above-mentioned specific viscoelasticity is an ink in the form of a gel, in a broad sense, comprising a crosslinked substance (preferably comprising a polymer or macromolecular substance) impregnated with a liquid dispersion medium (or a vehicle).

In the ink of the present invention it is presumed that the ink is substantially non-adhesive or not substantially transferred to a transfer-receiving medium because the liquid dispersion medium except for a minor portion thereof is well retained in the crosslinked substance.

It is also presumed that when the ink is supplied with a pattern of an energy, such as that due to heat or electric conduction, the crosslinked structure is changed thereby, so that the ink is imparted with an adhesiveness in a pattern corresponding to the energy pattern.

Herein, the "crosslinked substance" refers to a single substance which per se can assume a crosslinked structure, or a mixture of a substance capable of assuming a crosslinked structure with the aid of an additive (such as a crosslinking agent for providing a crosslinking ion such as borate ion), and the additive. Further, the term "crosslinked structure" refers to a three-dimensional structure having a cross-linkage or crosslinking bond. The crosslinkage may be composed of any one or more of covalent bond, ionic bond, hydrogen bond and van der Waal's bond.

In the ink of the present invention, the crosslinked structure is only required to be such that a desired degree of liquid dispersion medium-retaining property is given thereby. More specifically, the crosslinked structure may be any one of a network, a honeycomb, a helix, etc., or may be an irregular one.

The liquid dispersion medium (or vehicle) in the ink of the present invention may be any inorganic or

organic liquid medium which is preferably liquid at room temperature. The liquid medium should preferably have a relatively low volatility, e.g., one equal to or even lower than that of water.

In the ink of the present invention, the kind, amount, etc., of the crosslinked substance is not particularly limited as long as it can provide an ink having the above-mentioned specific viscoelasticity.

A preferred example of the liquid dispersion medium is an aqueous or a hydrophilic dispersion medium inclusive of water, a water-miscible solvent, and a mixture of water and a water-miscible solvent.

In case where such an aqueous or hydrophilic dispersion medium is used as the liquid dispersion medium, the crosslinked substance may preferably be composed of or from a natural or synthetic hydrophilic (or water-soluble) high polymer or macromolecular substance.

Examples of such a hydrophilic high polymer include: plant polymers, such as guar gum, locust bean gum, gum arabic, tragacanth, carrageenah, pectin, mannan, and starch; microorganism polymers, such as xanthane gum, dextrin, succinoglucan, and curdran; animal polymers, such as gelatin, casein, albumin, and collagen; cellulose polymers such as methyl cellulose, ethyl cellulose, and hydoxyethyl cellulose, starch polymers, such as soluble starch, carboxymethyl starch, methyl starch; alginic acid polymers, such as propylene glycol alginate, and alginic acid salts; other semi-synthetic polymers, such as derivatives of polysaccharides; vinyl polymers, such as polyvinyl alcohol, polyvinylpyrrolidone, polyvinyl methyl ether, carboxy-vinyl polymer, and polysodium acrylate; and other synthetic polymers, such as polyethylene glycol, and ethylene oxide-propylene oxide block copolymer. These polymers may be used singly or in mixture of two or more species, as desired.

The hydrophilic polymer may preferably be used in a proportion of 0.01 - 30 parts, more preferably 0.1 - 30 parts, particularly preferably 1 - 27 parts, with respect to 100 parts of the liquid dispersion medium.

On the other hand, when oil such as mineral oil or an organic solvent such as toluene is used as the liquid dispersion medium, the crosslinked substance may be composed of or from one or a mixture of two or more compounds selected from metallic soaps inclusive of metal stearates, such as aluminum stearate, magnesium stearate, and zinc stearate, and similar metal salts or other fatty acids, such as palmitic acid, myristic acid, and lauric acid; or organic substances such as hydroxypropyl cellulose derivative, dibenzylidene-D-sorbitol, sucrose fatty acid esters, and dextrin fatty acid esters. These substances may be used in an amount similar to that of the above-mentioned hydrophilic polymer.

In respects of easily obtaining the above-mentioned fluidity and liquid dispersion medium-retaining property and further easy control of crosslinked structure on energy application, hydrophylic polysaccarides inclusive of carrageenan, locust bean gum, xanthane gum, guar gum, etc., and their derivatives are preferred. Further, in many cases, a mixture system is preferred. Examples of such mixture systems include a mixture of carrageenan and locust bean gum, a mixture of xanthane gum and locust bean gum; and further a mixture of a galactomannan such as guar gum (or modified guar gum) or locust bean gum, or a polymer having hydroxy groups such as polyvinyl alcohols with a crosslinking agent such as a boric acid source compound capable of providing borate ions.

Herein, "guar gum" is a polysaccaride, obtained from the seeds or guar plant, consisting mainly of mannose and galactose. For example, it is preferred to use a boric acid source compound such as sodium borate ($Na_2B_4O_7 \cdot 10H_2O$) in a proportion of 1 - 20 parts per 100 parts of the guar gum.

Further, "locust bean gum" is a polysaccaride, obtained from a perennial Ceratonia siliqua L. (carob tree), consisting mainly of mannose and galactose. The locust bean gum has a kind of block structure.

Further, "xanthane gum" is a polysaccaride, obtained from a secretion of xanthomonas bacteria. It is preferred that the xanthane gum is used in a proportion of 50 - 200 parts per 100 parts of the locust bean gum.

Further, "polyvinyl alcohol" (or "polyvinyl alcohol compounds") used herein includes substantially completely saponified products represented by the formula:

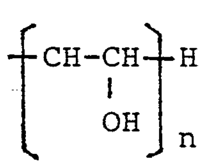 ,

partially saponified product having a kind of block structure represented by the formula (inclusive of random form):

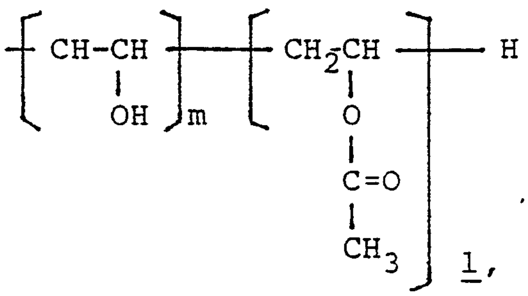

and polymers having the above structures as a skeleton.

The polyvinyl alcohol compound may particularly preferably have a saponification degree of 70 mol% or above and a viscosity of 80 cps or below as measured at 20 °C in a 4 % aqueous solution by means of Hoepler viscometer. For example, it is preferred to use as a crosslinking agent, a boric acid source compound such as sodium borate ($Na_2B_4O_7 \cdot 10H_2O$) in a proportion of about 1 - 50 parts per 100 parts of the polyvinyl alcohol.

Generally speaking, as the amount of the polyvinyl alcohol based on the liquid dispersion medium (such as water) becomes smaller or as the average polymerization degree thereof becomes smaller, the larger amount of the boric acid source compound may preferably be used. However, the amount of the boric acid source compound may preferably be so small as possible in view of the sensitivity to electrochemical energy application.

Incidentally, the above-mentioned crosslinked substance is a component which imparts a crosslinked structure to the ink before image formation. Accordingly, it is not necessarily required that this component has a crosslinked structure when the ink is fixed to a transfer-receiving medium such as a recording medium of, e.g., paper.

The crosslinked substance used in the present invention can form a crosslinked structure by itself e.g., based on its polymer characteristic, but can be used in combination with a crosslinking agent (or gelling agent) for more positively crosslinking the crosslinked substance in order to improve the ink characteristics when supplied with or not supplied with energy.

A preferred class of the crosslinking agent may be ionic crosslinking agents, including: various salts such as $CuSO_4$; boric acid source compounds capable of generating borate ions in water, such as borax and boric acid. When such an ionic crosslinking agent is used, it becomes easy to selectively provide the ink with an adhesiveness through an electrochemical reaction involving transfer of electrons or a pH change. As a result, the use of such an ionic crosslinking agent is preferred in order to suppress the consumption of pattern energy. The ionic crosslinking agent may preferably be used in a proportion of 0.01 - 30 parts, particularly 0.05 - 20 parts, per 100 parts of the crosslinked substance.

Instead, a crosslink agent utilizing a crosslinking bond such as glyoxal or dialdehydebenzene, or a crosslinking agent utilizing a hydrogen bond such as polyhydric alcohols can also be used.

In the present invention, water along may be used as a preferable liquid dispersion medium. However, for preventing drying or retaining wetness of the ink and other purposes, a water-miscible organic solvent (such as alcohols and amines) or a mixture of water and a water-miscible organic solvent can also be used preferably.

In a case where the ink of the present invention is arbitrarily colored, any of dyes and pigments generally used in the field of printing and recording may preferably be used as a coloring agent or colorant. Such colorant may be dissolved or dispersed in the ink. The colorant may preferably be used in a proportion of 0.1 - 30 % particularly 1 - 15 %, based on the total weight of the ink.

A dye or a pigment having a relatively small particle size (preferably 100 μ or below, more preferably 1 μ or below) may preferably be used as a colorant in the ink of the present invention. Such dye or pigment may desirably be fixed to a recording medium by natural drying or under slight pressure or heating, on the basis of penetration into the recording medium such as plain paper, or of an adhesion force due to the crosslinked substance of the ink.

In order to adjust the viscoelasticity of the image recording ink of the present invention, fine powder filler having an average particle size of 1 mμ (millimicron) - 100 μ, preferably 0.01 - 50 μ, more preferably 0.1 - 20 μ, may be contained in the ink.

When the fluid ink of the present invention (such as an ink in the form of a gel) containing the fine powder filler is used, a transferred image of further high quality may be obtained. The reason for this may presumably be considered that not only non-selective transfer of the ink to a transfer-receiving medium under no energy application is suppressed because of an increase in viscoelasticity based on the

combination of the crosslinked substance and the fine powder filler, but also, in an ink pattern formed by an ink transfer, a decrease in image quality due to trailing, fog, or transfer defect, etc., is suppressed because of an increase in viscosity under energy application (e.g., in a case where the ink is patternwise converted into a sol state).

If the above-mentioned fine powder filler has an average particle size of below 1 mμ it is difficult to obtain the effect thereof on the viscosity control. If the average particle size is above 100 μ, the dispersion state thereof is liable to be ununiform, or the fluidity of the ink or the smoothness of the ink coating surface undesirably becomes insufficient.

Because the ink of the present invention containing the above-mentioned fine powder filler shows good fixing characteristics to a recording medium such as plain paper, it is usually unnecessary to use a fixing means using heat and/or pressure, unlike a case wherein an image is formed by using electrophotographic toner particles, etc. Accordingly, such ink may preferably be used in view of reduction in energy consumption.

Incidentally, in the present invention, the average particle size may be determined by using a photograph taken with an electron microscope (i.e., electron micrograph), according to the following formula:

$$\text{Average particle size (or diameter) } d_A = \frac{\Sigma n_i d_i^3}{\Sigma n_i d_i^2},$$

wherein ni represents the number of particles having a particle size of di. In this measurement, the number of particles measured may preferably be $10^3$ - $10^5$, or above. (With respect to the details of this measurement method, there may be used as a reference "Handbook of Carbon Black" pp. 176 - 177, published by Tosho ShuppanSha K.K.).

As the fine powder filler, e.g., fillers known in the field of polymer material may be used as such. Specific examples thereof may preferably include: silica (or silicic acid), carbon black, silicate, calcium carbonate, magnesium carbonate, calcium•magnesium carbonate, aluminum hydrate, barium sulfate, calcium sulfate, calcium sulfite, etc. These fillers may be used singly or as a mixture of two or more species, as desired.

In the present invention, because the above-mentioned fine powder filler may be used mainly in order to adjust the viscoelasticity of the ink, it can be used whether it has a coloring property or not. However, there may preferably be used fine powder filler having substantially no coloring property (i.e., those being colorless or white, or having a color similar to that of a recording medium such as paper), because the color of the ink may arbitrarily determined by the kind of a colorant, or because the amount of the fine powder filler added to the ink may be determined without consideration of the color of the ink.

In the present invention, the fine powder filler may preferably be contained in the ink in an amount of 0.01 - 50 %, more preferably 1 - 30 %, particularly preferably 5 - 20 %, based on the total weight of the ink (including the fine powder filler per se). If the amount of the fine powder filler is below 0.01 %, an increase in the viscoelasticity of the fluid ink becomes insufficient whereby it is difficult to sufficiently improve the image quality On the other hand, if the above amount is above 50 %, it is difficult to apply the ink onto an ink-carrying method, or an adhesiveness thereof under energy application is liable to be insufficient, because of an excessive increase in the ink viscoelasticity.

Further, in order to adjust the viscoelasticity of the image recording ink of the present invention, the ink may contain particles which are substantially insoluble in a liquid dispersion medium and are capable of absorbing the liquid dispersion medium (hereinafter, referred to as "absorbent particles").

In a case where such absorbent particles are contained in the image recording ink, the absorbent particles well retain the liquid dispersion medium in the ink and prevent image fog or non-selective transfer of the ink. Further, when the ink including the absorbent particles is transferred to a recording medium, they discharge the liquid dispersion medium, e.g., under pressure, and imparts good fixability to the ink. As a result, a transferred image of high quality having good fixing characteristics may be obtained.

The absorbent particles used in the present invention may preferably show "liquid absorption" as defined below, in the range of 5 ml - 1000 ml, more preferably 50 ml - 500 ml. The liquid absorption may be measured in the following manner.

A liquid dispersion medium such as water used in the ink is gradually added to 1 g of powder of the above-mentioned absorbent particles while kneading the resultant mixture. The state of the powder is observed and there is found an amount (or a range of amount) of the liquid dispersion medium in which the powder is converted from a dispersed state into the state of a mass, and the mass substantially retains the

liquid dispersion medium. At this time, the amount of the liquid dispersion medium adde to the powder is the "liquid absorption".

Generally speaking, the liquid absorption of the absorbent particles is remarkably decreased when a salt is dissolved in the liquid dispersion medium. Accordingly, if the liquid absorption as defined above is less than 5 ml, the effect thereof is a little.

Specific examples of such absorbent particles may preferably include particles of a resin having an affinity for an liquid dispersion medium used, or particles of wood, pulp, fiber, etc. There may particularly preferably be used particles obtained by pulverizing these materials into irregular shapes, or those having an increased surface area obtained by imparting porosity to the particles of these materials.

In a case where the ink of the present invention is an aqueous-type, the absorbent particles may preferably comprise a material which has been obtained by crosslinking the above-mentioned hydrophilic resin (or polymer) as a crosslinked substance to insolubilize it in water. Further, it is preferred that such material is easily formed into particles or powder and has a property such that the particulate shape can be retained even when it absorbs a liquid dispersion medium such as water.

Incidentally, in the present invention, "substantially insoluble in a liquid dispersion medium" means that the individual particles can be observed through a microscope when a liquid dispersion medium such as water is excessively added to 1 part of absorbent particles (e.g., in an amount of about 1000 parts) and stirred, and thereafter the particles are colored by a dye, etc.

Specific examples of such hydrophilic resin particularly preferred in the present invention may include: resins including starch-type cellulose-type such as cellulose ether and carboxymethyl cellulose, polyacrylic acid salt-type such as polysodium acrylate, polyacrylonitrile-type, polyethylene oxide-type, polystyrene sulfone-type, polyvinyl alcohol-type, urethane-type, and maleic acid-type; or copolymers comprising at least one of these as a predominant component, such as acrylic acid-vinyl alcohol copolymer, saponification product of vinyl acetate-acrylic acid ester copolymer, reaction product of polyvinyl alcohol and maleic anhydride, crosslinked copolymer of isobutylene-maleic acid, saponification product of starch-acrylonitrile graft polymer, and starch-acrylic acid graft polymer.

Further, as inorganic absorbent particles, gels (xerogel, etc.) such as $Al_2O_3$, $Fe_2O_3$, $BaSO_4$, $CaCO_3$, and silica gel, may preferably be used.

Among these, acrylic acid-vinyl alcohol copolymer is particularly preferred since the mixing thereof can impart elasticity to the ink.

These absorbent particles may preferably have an average particle size of about 0.1 - 50 $\mu$, more preferably about 1 - 30 $\mu$, in their dry state. The average particle size may preferably be about 1 - 100 $\mu$, more preferably about 1 - 50 $\mu$, when they absorb a liquid dispersion medium. If the average particle size in the dry state is below 0.1 $\mu$, the particles per se are liable to be formed into masses thereof whereby the liquid dispersion medium is not sufficiently absorbed into the particles. On the other hand, if the average particle size in the dry state exceeds 50 u, somewhat rough images are liable to be formed from the ink.

The absorbent particles used in the present invention may be either particles of which particle size is changed due to the absorption of a liquid dispersion medium, or those of which particle size is not substantially changed due to the absorption. However, in order to easily discharge the liquid dispersion medium onto a recording medium such as paper, there may preferably be used absorbent particles of which particle size is increased due to the absorption of the liquid dispersion medium (e.g., on the basis of swelling). In such case, the particle size of the swelled particles may preferably, be about 1 - 10 times that of the particles before the swelling.

The fluid ink of the present invention may preferably contain the absorbent particles in an amount of 0.5 - 40 parts, more preferably 0.5 - 10 parts, in their dry state, per 100 parts of the liquid dispersion medium. If the amount of the absorpbent particles is below 0.5 part, the viscoelasticity of the ink is insufficiently increased due to the addition thereof. If the amount exceeds 40 parts, the amount of the liquid dispersion medium becomes relatively insufficient, whereby the fluidity of the ink is liable to be insufficient. Incidentally, the amount of the absorbent particles is 10 parts or above, they can impart to the ink a state apparently similar to a gel state. However, if a crosslinked substance is not contained in the ink, the above-mentioned non-adhesiveness of the ink cannot be attained, and an adhesiveness cannot be imparted to the ink under energy application.

In an embodiment wherein the absorbent particles are contained in the ink of the present invention, there may preferably be used a colorant which can easily be absorbed into the absorbent particles together with a liquid dispersion medium, in view of the suppression of image fog. Therefore, as the colorant, there may particularly preferably used a dye, or a pigment or the like which has a particle size of 1 $\mu$ or less, (more preferably 0.1 $\mu$ or less), and can be well dispersed in the liquid dispersion medium. Further, in order to prepare such ink, the absorbent particles may preliminarily be colored in a desired color by causing the

particles to absorb a mixture of a colorant and a liquid dispersion medium. Then, the colored absorbent particles may preferably be added to a gel comprising a liquid dispersion medium and a crosslinked substance. Such method is preferred in order to cause the absorbent particles to effectively retain the colorant therein, so that image fog may be suppressed.

In the above-mentioned embodiment, the fine powder filler or absorbent particles (i.e., particles which is substantially insoluble in a liquid dispersion medium and can absorb the liquid dispersion medium) are contained in the ink, whereby the ink is formed into one in the form of sludge. With respect to such sludge ink, the particles (i.e., fine powder filler or absorbent particles) are tightly aligned on the ink interface so that the contact of the dispersion medium to a transfer-receiving medium is suppressed, whereby the non-selective transfer of the ink to the transfer-receiving medium may further be suppressed.

The image recording ink according to the present invention may be obtained from the above components, for example, by uniformly mixing a liquid dispersion medium such as water, a crosslinked substance such as a hydrophilic polymer, and also an optional additive such as fine powder filler, absorbent particles (e.g., those comprising an insolubilized polymer obtained by crosslinking a hydrophilic polymer, etc.), and further as desired, a crosslinking agent, an electrolyte, etc., under heating as desired, to form a viscous solution or dispersion, which is then cooled to be formed into a gel.

Hereinbelow, there will be described an embodiment of the image recording method using the image recording ink of the present invention as described above.

Referring to Figure 2 which is a partial schematic sectional view taken across the thickness of a recording medium showing an embodiment of the recording apparatus used in such recording method, an ink 2 contained in an ink container 1 is carried on the surface of a cylindrical ink-carrying roller 3 of which the surface comprises, e.g., stainless steel, and conveyed in an arrow B direction along with the rotation in the arrow A direction of the roller 3.

The ink 2 moved in this way is supplied with a pattern of voltage corresponding to an image signal from a recording electrode (or an electrode array) 4 at an energy application position where the ink 2 contacts the electrode 4. A current corresponding to the voltage flows from the recording electrode 4 to, e.g.,the ink-carrying roller 3, through the ink 2, whereby the ink 2 is selectively imparted with an adhesiveness, e.g., because of a change in crosslinking structure through an electro-chemical reaction in the ink 2.

A portion of the ink 2 selectively imparted with an adhesiveness is further moved in the arrow B direction to reach an ink transfer position where the layer of the ink 2 contacts an intermediate transfer roller 5 which is e.g., composed of a cylinder of iron coated with a hard chromium plating, and is disposed with a certain spacing from the ink-carrying roller 3 at the ink transfer position.

At the ink transfer position, the adhesive portion of the ink 2 to which the above-mentioned selective adhesiveness is imparted is transferred onto the intermediate transfer medium 5 rotating in the arrow C direction to form an ink pattern 21 thereon.

The ink pattern 21 is then conveyed along with the rotation in the arrow C direction of the intermediate transfer roller 5 to reach an ink pattern-transfer position where the roller 5 confronts a platen roller 7 by the medium of a recording medium 6.

At the ink pattern-transfer position, a recording medium 6 of, e.g., plain paper being conveyed in the direction of an arrow D, is disposed in contact with the surface (i.e., a surface on which the ink pattern is formed) of the intermediate transfer roller 5. Further, the platen roller 7 as a transfer means having a surface of, e.g., silicon rubber is disposed opposite to the roller 5 and rotating in the direction of an arrow E so as to movably sandwich the recording medium 6 with the intermediate transfer roller 5.

At the ink pattern-transfer position, the ink pattern 21 formed on the intermediate transfer medium 5 is transferred to the recording medium 6 thereby to form a transferred image 22.

The remainder of the ink 2 not transferred to the intermediate transfer roller 5 at the ink transfer position is further conveyed in the arrow B direction to be separated from the intermediate transfer roller 5 because of its non-adhesiveness and the action of a gravity, etc., and recycled to the ink container 1 for reuse.

While a representative embodiment of the image recording apparatus or method according to the present invention has been described above, upstream from the energy application position where the recording electrode 4 faces the ink-carrying roller 3, a blade 8 as an ink layer thickness-regulation means for regulating the thickness of a layer of the ink 2 on the roller 3 may be disposed as shown in Figure 2, as desired.

Further, in a case where a transfer rate is not sufficiently high with respect to the transfer of the ink pattern 21 from the intermediate transfer roller 5 to the recording medium 6 such as plain paper, it is preferred to dispose a cleaning means 9 having a blade 9a of, e.g., urethane rubber as shown in Figure 2 to remove residual ink on the intermediate transfer roller 5.

Figure 5 shows an embodiment of the recording electrode 4 as a preferred example of energy

application means for applying energy corresponding to an image signal. With reference to Figure 5 which is an enlarged partial perspective view, the recording electrode 4 may be obtained by forming a plurality of electrode elements 42 of a metal such as Cu on a substrate 41, and coating the electrode elements 42 except for the tip portions thereof contacting the ink with an insulating film 43 of polyimide, etc. The exposed tip portions of the electrode elements 42 may preferably be coated with a plating of Au, Pt, etc. In view of the durability, a Pt plating is preferred.

In an embodiment already explained with reference to Figure 2, a current is passed between the recording electrode 4 and the ink-carrying roller 3, but it is also possible that a current is passed between an adjacent pair of the plurality of electrode elements 42 on the recording electrode 4.

Then, there will be described another embodiment of an image recording apparatus using the ink according to the present invention, with reference to a schematic sectional view of Figure 3 and a schematic perspective view of Figure 4.

In the apparatus shown in Figure 3, an ink 2 is applied onto an ink-carrying member according to a roller coating method. When such roller coating method is used, there may suitably be used an ink having a viscoelasticity (or viscosity) in a wider range than in the case of the blade coating method as shown in Figure 2.

Referring to Figure 3, there is provided an ink-holding member 1a being capable of holding therein an image recording ink 2. Below the ink-holding member 1a, i.e., on the side of an ink-supply part thereof through which the ink 2 can be flown, there is disposed an ink-application roller 11 for applying the ink 2 onto the ink-carrying roller 3, which is rotatable in the direction of an arrow F. The embodiment shown in Figure 3 is substantially the same as that shown in Figure 2 except that the image recording ink 2 is applied onto the ink-carrying roller 3 by means of the ink-holding member 1a and the ink application roller 11.

In Figure 3, the ink-carrying roller 3, an intermediate transfer roller 5, and the ink-application roller 11 respectively comprise, e.g., a cylindrical roller of about 40 mm in diameter having a surface of stainless steel (stainless steel 304). The surfaces (periphery surfaces) of these rollers have preferably been ground by a grinder. It is preferred that the surface of the ink-carrying roller 3 has further been subjected to blasting so as to provide a 10 point-average roughness $R_Z$ (an average of roughnesses measured at 10 points) of about 100 $\mu$.

As described hereinabove, according to the present invention, there is provided an image recording ink which is suitably used in an image recording method realizing a very low running cost without using a conventional, expensive ink ribbon laving a solid ink layer; and which is excellent both in fluid layer-forming property and image recording characteristics on the basis of a good balance between plasticity and elasticity.

Especially, according to a preferred embodiment of the present invention wherein an adhesiveness can be imparted to the ink by utilizing an electrochemical change, image recording can be effected at an amount of current which is about 1/10 of that required in the conventional thermal transfer method using a thermal head, whereby the recording cost can be remarkably reduced also in respect to energy consumption.

Hereinbelow, the present invention will be explained with reference to Examples which however are not intended to restrict the scope of invention in any way. "Part(s)" refers to part (s) by weight.

## Example 1

Water 100 parts
Polyvinyl alcohol 2000 9 parts
(available from Kishida Kagaku K.K., polymerization degree: about 200), saponification degree: 98.5 - 99.4 mol%)
Water-soluble blue dye 6 parts
(Water Blue 3, mfd. by Orient Kagaku K.K.)

The above ingredients were uniformly mixed under heating at 70° C. To the resultant mixture, 0.6 part of borax (decahydrate) was added and mixed therewith, and then leftstanding at room temperature to form a gel ink retaining a high percentage of water and having an indefinite shape, i.e., a fluidity. At this time, it was preferred to adjust the pH of the ink to 7 - 11 by using an acid or alkali.

In the thus prepared gel ink, it was assumed that -OH groups of the polyvinyl alcohol were crosslinked by borate ions.

Referring to Figure 1B, the thus obtained gel ink was formed into a disk shape a diameter of 25 mm and a thickness of 2 mm. A sine strain with an angular velocity of 1 rad/sec was applied to the ink sample at 25°C by means of Rheometer RMS-700 (mfd. by Rheometrics Inc., U.S.A.). Based on such measurement, the above-mentioned $\delta$(phase shift angle between the absolute amplitude of the stress and that of the strain was determined in the above-described manner, and the ratio ($G''/G'$) of the loss elasticity nodulus ($G''$) to the storage elasticity modulus ($G'$) was determined by the formula $G''/G' = \tan \delta$. As a result, the ratio ($G''/G'$) was about 1.6.

Then, by using the above-mentioned gel ink, image formation was effected by means of a recording apparatus as shown in Figure 3.

In Figure 3, an ink-application roller 11 comprising a cylindrical roller os 40 mm in diameter having a surface of stainless steel 304 of which surface had been ground with a grinder, and an ink-carrying roller 3 comprising a stainless steel 304 roller of 40 mm in diameter of which surface has been subjected to blasting treatment so as to provide a roughness of $R_Z = 100\ \mu$ were disposed opposite to each other with a gap of $d_1 = 2$ mm at an ink supply position. Further, an intermediate transfer roller 5 comprising a stainless steel 304 roller of 40 mm in diameter, of which surface had been ground with a grinder, and the above-mentioned ink-carrying roller 3 were disposed opposite to each other with a gap of $d_2 = 2$ mm at an ink transfer position. The gel ink 2 of the present invention obtained above was charged in an ink-holding member 1a.

The ink-carrying roller 3 was rotated in the arrow A direction at about 20 rpm, and the ink- application roller 11 was rotated in the arrow F direction at about 10 rpm to form a layer of the ink 2 on the ink-carrying roller 3. As a result, the fluid ink 2 of the present invention could be uniformly applied onto the ink-carrying roller 3 and the surface of the ink layer applied onto the ink-carrying roller 3 was extremely smooth.

Then, in contact with the layer of the ink 2, the intermediate transfer roller 5 was rotated in the arrow C direction at about 20 rpm. In this instance, when electric energy was not supplied from a recording electrode 4 to the ink layer 2, the ink 2 was not substantially transferred to the intermediate transfer roller 5. The recording electrode 4 was disposed with a gap of $d_3 = 1.7$mm from the surface of the ink-carrying roller 3, at an energy application position. The recording electrode 4 had a structure as shown in Figure 5, wherein each electrode element 42 of copper was coated with an insulating film 43 except for a tip thereof which was coated with rhodium plating in an area of 100 x 100 $\mu$m.

On the other hand, when a pulse of 10 V and 1 msec was applied through the ink layer 2 between the recording electrode 4 as the anode and the ink-carrying roller 3 as the cathode to pass a current of about 0.5 mA per each electrode element 42, the ink 2 was selectively transferred to the intermediate transfer roller 5 to form an ink pattern 21 thereon.

At the ink image transfer position, a platen roller 7 of a 16 mm-dia. iron cylindrical roller surfaced with 2 mm-thick silicone rubber layer was disposed opposite to the intermediate transfer roller 5 with a recording medium 6 of plain paper disposed therebetween moving in the arrow D direction. Further, the platen roller 7 was rotated in the arrow E direction at the same speed as the transfer roller 5 while exerting a slight pressure onto the recording medium 6. As a result, blue-colored dot images (printed letter) 22 corresponding to the above-mentioned ink pattern 21 were formed on the recording medium 6.

The transferred image 22 obtained on the recording medium 6 was a high-quality image having a sufficiently high image density without trailing, fog, or blurring, etc.

Incidentally, when 1 cc of 0.1N-hydrochloric acid aqueous solution was added to 50 g of the above-mentioned gel ink under stirring, the ink was completely converted into a sol state providing a viscosity (25°C) measured by a Hoepler viscometer of about 700 cps.

Example 2

Water 100 parts
Guar gum 1 part
(Emco Gum CSAA (trade name) mfd. by Meyhall, Switzerland)
Sodium borate ($Na_2B_4O_7 \cdot 10H_2O$) 0.05 part

The above ingredients were uniformly mixed under heating at 70°C, and then 50 parts of toner particles of 10 $\mu$m size (cyan toner, before addition of externally added fluidity improver, For NP color copier, mfd. by Canon K.K.) were added to the resultant mixture and uniformly mixed to obtain a gel ink in the form of sludge.

When the ratio $(G''\ G')$ of the thus obtained ink was measured in the same manner as in Example 1, the ratio $(G''\ G')$ was about 0.5.

The sludge ink was charged in an apparatus as shown in Figure 2 wherein an ink-carrying roller 3 comprising a cylindrical roller of 20 mm in diameter having a surface of stainless steel with a surface roughness of 1S and an intermediate transfer roller 5 comprising an iron cylindrical roller of 20 mm in diameter having a surface coated with a hard chromium plating were disposed opposite to each other with a gap of 2 mm at an ink transfer position. The sludge ink 2 obtained above was charged in the ink container 1.

The ink-carrying roller 3 was rotated in the arrow A direction at about 60 rpm to form thereon a layer of the ink 2, and in contact with the ink layer 2, the intermediate transfer roller 5 was rotated in the arrow C direction at about 50 rpm. In this instance, when electric energy was not supplied from a recording electrode 4 to the ink layer 2 the ink 2 was not substantially transferred to the intermediate transfer roller 5.

On the other hand, by use of the same recording electrode 4 as in Example 1, a pulse was applied through the ink layer in the same manner as in Example 1, the ink 2 was selectively transferred to the intermediate transfer roller 5 to form a similar ink pattern 21 thereon. The ink pattern 21 was then transferred to a recording medium 6 of plain paper, whereby there was obtained a transferred image 22 of good quality substantially the same as in Example 1.

Example 3

Water 100 parts
Polyvinyl alcohol 10 parts
(Gohsenol GL-05, mfd. By Nihon Gosei Kagaku K.K.)
Borax 0.61 part
Water-soluble blue dye 0.5 part
(Water Blue 3, mfd. by Orient Kagaku K.K.)

A gel ink was prepared in the same manner as in Example 1 except that the above ingredients were used instead of those used in Example 1.

When the ratio $(G''.G')$ of the thus obtained ink was measured in the same manner as in Example 1, the ratio $(G''\ G')$ was about 9.2.

The above ink was subjected to image recording by means of the apparatus shown in Figure 3 in substantially the same manner as in Example 1. More specifically, when the ink-application roller 11 was rotated at about 10 rpm, there were obtained a layer of the ink 2 well applied onto the ink-carrying roller 3 in the same manner as in Example 1, and a good transferred image 22 substantially the same as in Example 1.

Example 4

Water 100 parts
Guar gum 1 part
(Emco Gum CSAA) mfd. by Meyhall, Switzerland)
Borax 0.05 part
Water-soluble blue dye 0.5 part
(Water Blue 3, mfd. by Orient Kagaku K.K.)

A gel ink was prepared in the same manner as in Example 1 except that the above ingredients were used instead of those used in Example 1. When the ratio $(G''\ G')$ of the thus obtained ink was measured in the same manner as in Example 1, the ratio $(G''\ G')$ was about 0.16.

The above ink was subjected to image recording by means of the apparatus shown in Figure 3 in substantially the same manner as in Example 1. More specifically, when the ink-application roller 11 was rotated at about 10 rpm, there were obtained a layer of the ink 2 well applied onto the ink-carrying roller 3 in the same manner as in Example 1, and a good transferred image 22 substantially the same as in Example 1.

Example 5

Water 100 parts
Polyvinyl alcohol 10 parts
(Gohsenol KP-08, mfd. by Nihon Gosei Kagaku Kogyo K.K.)
Red reactive dye 4.4 parts
(E-S3B, mfd. by Nihon Kayaku K.K.)
Silica 14.7 parts
(Aerosil 200, mfd. by Nihon Aerosil K.K., Average particle size: 12 mμ)

The above ingredients were uniformly mixed under heating at 60 - 70° C. To the resultant mixture, 0.55 part of borax was added under stirring and then leftstanding at room temperature to form a gel ink retaining a high percentage of water and having an indefinite shape, i.e., a fluidity. At this time, it was preferred to adjust the pH of the ink to 7 - 11 by using an acid or alkali.

When the ratio ($G''/G'$) of the thus obtained ink was measured in the same manner as in Example 1, the ratio ($G''/G'$) was about 0.6.

The above gel ink was subjected to image formation by means of the apparatus shown in Figure 2.

More specifically, the gel ink 2 was charged in an apparatus as shown in Figure 2 wherein an ink-carrying roller 3 comprising a cylindrical roller of 40 mm in diameter having a surface of stainless steel with a surface roughness of 100S and an intermediate transfer roller 5 comprising an iron cylindrical roller of 40 mm in diameter having a surface coated with a hard chromium plating were disposed opposite to each other with a gap of 1 mm at an ink transfer position. The gel ink 2 obtained above was charged in the ink container 1.

The ink-carrying roller 3 was rotated in the arrow A direction at about 60 rpm to form thereon a layer of the ink 2. As a result, the fluid ink 2 of the present invention could be uniformly applied onto the ink-carrying roller 3 and the surface of the ink layer applied onto the ink-carrying roller 3 was extremely smooth.

Then, in contact with the layer of the ink 2, the intermediate transfer roller 5 was rotated in the arrow C direction at about 50 rpm. In this instance, when electric energy was not supplied from a recording electrode 4 to the ink layer 2, a very slight amount of water was transferred to the intermediate transfer roller 5, but the ink 2 was not substantially transferred to the intermediate transfer roller 5. The recording head electrode 4 had a structure as shown in Figure 5, wherein each electrode element 42 of copper was coated with a polyimide insulating film 43 except for a tip thereof which was coated with Au plating in an area of 100 μm x 100 μm.

On the other hand, when a pulse of 15 V and 5 msec was applied through the ink layer 2 between the recording electrode 4 as the anode and the ink-carrying roller 3 as the cathode to pass a current, the ink 2 was selectively transferred to the intermediate transfer roller 5 to form an ink pattern 21 thereon.

At the ink image transfer position, a platen roller 7 of a 20 mm-dia. iron cylindrical roller surfaced with 10 mm-thick silicone rubber layer was disposed opposite to the intermediate transfer roller 5 with a recording medium 6 of plain paper disposed therebetween moving in the arrow D direction. Further, the platen roller 7 was rotated in the arrow E direction at the same speed as the intermediate transfer roller 5 while exerting a slight pressure onto the recording medium 6. As a result, cyan colored dot images each of about 100 x 100 μm in size corresponding to the above ink pattern 21 were formed on the recording medium 6.

The transferred image 22 obtained on the recording medium 6 was a high-quality image having a sufficiently high image density without trailing or fog, etc.

Then, the fixability of the thus obtained transferred image 22 was evaluated in the following manner.

A plastic plate of 30 mm x 30 mm covered with a laminate of 2 sheets of lens-cleaning paper (trade name: Dusper, mfd. by Ozu Paper Co. Ltd.) was disposed under the bottom surface of a weight of 500 g for a 500 g-even balance. The above transferred image 22 on the recording medium 6 was rubbed with the thus disposed lens cleaning paper by using 10 reciprocal movements. The reflection densities of the image were measured before and after the rubbing.

According to the above measurement, the reflection density of the image after the rubbing showed 95 % that of the image before the rubbing. As a result, the fixability of the image was found to be sufficient.

Example 6

<A> Water 100 parts
Polyvinyl alcohol 5 parts
(Gohsenol GL-05, mfd. by Nihon Gosei Kagaku K.K.)
Sodium borate (decahydrate) 0.1 part

<B>

water 50 parts
Dye 2.5 parts
(Water Blue 3, mfd. by Orient Kagaku K.K.)
Acrylic acid-vinyl alcohol copolymer 5 parts
(average particle sizes)
(particle size: 10 μ, SP-510, mfd. by Sumitomo Kagaku Kogyo K.K.)

The above ingredients (A) were uniformly mixed under heating at 70°C and then leftstanding at room temperature to form a viscous solution (in the form of a sol).

Separately, according to the above prescription (B), the dye (Water Blue 3) was dissolved in water, and to the resultant solution, the polymer average particle sizes (SP-510) were added to form a uniform mixture. The uniform mixture was then added to the sol solution prepared above comprising the ingredients (A) to form a gel ink in the form of a sludge retaining a high percentage of water and having an indefinite shape.

According to our experiment, gelation did not occur when several parts of sodium borate were added to the above ingredients (B), or when the ingredients (A) other than the sodium borate were added to the ingredients (B). Accordingly, it was assumed that the gelation of the ingredients (A) was promoted in the presence of the ingredients (B), particularly the polymer abosrbent particles, even when the amount of the sodium borate as a crosslinking agent was smaller than that in the ordinary case, whereby the ingredients (A) were converted into a gel.

Then, a small amount of an aqueous NaOH solution was added to the thus obtained gel ink in the form of a sludge to adjust the pH to 8.7, whereby an image recording ink of the present invention was obtained.

The viscosity of the ink prepared above was measured by means of a rotational viscometer (Vismetron Model VS-A1, mfd. by Shibaura System K.K.) with a rotor of about 3 mm in diameter at normal temperature (25°C), the ink showed a viscosity of about 300,000 cps at a rotor speed of 0.3 rpm; and a viscosity of about 180,000 cps at a rotor speed of 1.5 rpm.

When the ratio ($G''G'$) of the thus obtained sludge ink was measured in the same manner as in Example 1, the ratio ($G''G'$) was about 1.4.

In this ink, it was assumed that in a structure wherein the -OH groups of the polyvinyl alcohol represented by the following formula;

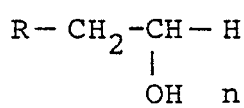

was crosslinked by a borate ion $BO_4^-$ as follows,

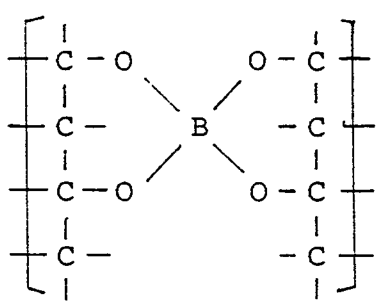

the particles of the acrylic acid-vinyl alcohol copolymer (SP-510) swelled by absorbing the aqueous dye solution thereinto were dispersed.

When the ink was observed through an optical microscope, it was found that the above copolymer particles (SP-510) were swelled due to the absorption of the aqueous dye solution to have a particle size of about 30 μ, while the polyvinyl alcohol gel was somewhat colored by the dye.

Incidentally, the ink was converted into a state having a smaller viscosity and further into a sol state, by acidifying the ink in its pH, or by adding thereto a compound such as glycerin which can easily form a boric acid ester. On the other hand, the viscosity of the ink was increased by alkalifying the ink in its pH. Further, an inorganic salt was added to the ink to adjust the electric conductivity thereof, the extensibility (or spinnability) thereof was decreased.

The above fluid ink was subjected to image formation by means of the apparatus shown in Figure 2.

More specifically, the sludge ink 2 was charged in an apparatus as shown in Figure 1 wherein an ink-carrying roller 3 comprising a cylindrical roller of 20 mm in diameter having a surface of stainless steel with a surface roughness of 1S and an intermediate transfer roller 5 comprising an iron cylindrical roller of 20 mm in diameter having a surface coated with a hard chromium plating were disposed opposite to each other with a gap of 2 mm at an ink transfer position. The sludge ink 2 obtained above was charged in the ink container 1.

The ink-carrying roller 3 was rotated in the arrow A direction at about 30 rpm to form thereon a layer of the ink 2, in contact with the layer of the ink 2, the intermediate transfer roller 5 was rotated in the arrow C direction at about 25 rpm. In this instance, when electric energy was not supplied from a recording electrode 4 to the ink layer 2, a very slight amount of water was transferred to the intermediate transfer roller 5, but the ink 2 was not substantially transferred to the intermediate transfer roller 5. In this case, at the ink image transfer position, a platen roller 7 of a 12 mm-dia. iron cylindrical roller surfaced with 4 mm-thick silicone rubber layer was disposed opposite to the intermediate transfer roller 5 with a recording medium 6 of plain paper disposed therebetween moving in the arrow D direction. Further the platen roller 7 was rotated in the arrow E direction at the same speed as the intermediate transfer roller 5 while exerting a slight pressure onto the recording medium 6. As a result, no fog was observed on the recording medium 6, but a slight amount of the ink component (i.e., a liquid dispersion medium) was collected at the cleaning blade part 9a of a cleaner 9.

On the other hand, when a pulse of 15 V and 4 msec was applied through the ink layer 2 between the recording electrode 4 as the anode and the ink-carrying roller 3 as the cathode to pass a current of about 9 mA per each electrode element 42 (Figure 5), the ink 2 was selectively transferred to the intermediate transfer roller 5 to form an ink pattern 21 thereon. The recording electrode 4 used herein had a structure as shown in Figure 5, wherein a plurality of electrode elements 42 were disposed on a substrate 41, and each electrode element 42 of copper was coated with a polyimide insulating film 43 except for a tip thereof which was coated with Au plating in an area of 500 μm x 200 um.

At the ink image transfer position, the recording medium 6 of plain paper was disposed on the intermediate transfer roller 5 in the same manner as described above, and a slight pressure was exerted on the recording medium by the platen roller 7. As a result, blue dot images 22 were formed on the recording medium 6.

The transferred image 22 as such had a sufficient fixability to the recording medium 6. When they were observed through an optical microscope, it was found that the dye solution was discharged from the absorbent particles of the acrylic acid-vinyl alcohol copolymer, and penetrated into the fibers of the recording medium 6. It was assumed that the dye solution was discharged from the absorbent particles mainly due to the pressure from the platen roller 7. Incidentally, a slight amount of the ink remaining on the intermediate transfer roller 5 downstream of the ink image transfer position was removed by means of a cleaner 9 having a blade 9a of urethane rubber.

According to our knowledge, it is presumed that the above image formation was effected because electrons were deprived of the borate ions $BO_4^-$ crosslinking the polyvinyl alcohol due to an anodic reaction to destroy at least a part of the crosslinked structure, whereby the ink was imparted with an adhesiveness selectively or imagewise.

Further, in this Example wherein only a very slight part of the ink 2 was subjected to breakage of the crosslinked structure, the restoration of the gel structure was observed in several seconds to several tens of seconds.

We believe that the restoration of the gel structure is presumably caused by diffusion of ions, but the period of the several seconds to several tens of seconds is long enough to transfer a portion of the ink which has been imparted with an adhesiveness based on signal application to the intermediate transfer roller 5 and is short enough to reuse the non-transferred remaining portion for further operation.

Comparative Example 1

Water 100 parts
Guar gum 4 parts
(Emco Gum CSAA)
Borax 0.08 part
Blue dye 0.5 part
(Water Blue 3, mfd. by Orient Kagaku K.K.)

A gel ink was prepared in the same manner as in Example 1 except that the above ingredients were used instead of those used in Example 1. When the ratio ($G''/G'$) of the thus obtained ink was measured in the same manner as in Example 1, the ratio ($G''/G'$) was about 0.05.

The thus prepared ink was charged into the apparatus as shown in Figure 3, and the ink was subjected to ink coating in the same manner as in Example 1. As a result, the fluidity (i.e., plastic behavior) was insufficient, and the applied ink layer was partially torn, whereby the ink could not be applied onto the ink-carrying roller 3 uniformly.

Comparative Example 2

Water 100 parts
Polyvinyl alcohol 5 parts
(Gohsenol GL-05, mfd. by Nihon Gosei Kagaku K.K.)
Borax 1 part
Water-soluble blue dye 0.5 part
(Water Blue 3, mfd. by Orient Kagaku K.K.)

A gel ink was prepared in the same manner as in Example 1 except that the above ingredients were used instead of those used in Example 1. When the ratio ($G''/G'$) of the thus obtained ink was measured in the same manner as in Example 1, the ratio ($G''/G'$) was about 10.5.

When 1 cc of 0.1N-HCl aqueous solution was added to the ink to completely convert it into a sol state, and thereafter the viscosity thereof was measured by a Hoepler viscometer, the viscosity (25°C) was 8 - 9 cps.

The above ink was subjected to image recording by means of the apparatus shown in Figure 3 in the same manner as in Example 1. As a result, the elastic restoration of the ink from the energy application step to the transfer step thereof to the intermediate transfer roller 5 was insufficient and the ink was insufficiently transferred to the intermediate transfer roller 5, whereby a good ink pattern 21 could not be formed. Further, the transferred image 22 comprising the ink slightly transferred to the plain paper 6 caused blurring and trailing on the paper surface, whereby only an image practically useless could be formed.

**Claims**

1. An image recording ink, comprising: a liquid dispersion medium, and a crosslinked substance impregnated with the liquid dispersion medium; the ink being capable of forming a fluid layer, substantially non-adhesive and capable of being imparted with an adhesiveness on application of an energy; the ink having a ratio ($G''/G'$) of a loss elasticity modulus ($G''$) to a storage elasticity modulus ($G'$) in the range of 0.1 - 10, when supplied with a sine strain having an angular velocity of 1 radian/sec.

2. An ink according to Claim 1, wherein said crosslinked substance comprises a polymer.

3. An ink according to Claim 1, which has a ratio ($G''/G'$) in the range of 0.2 - 5.

4. An ink according to Claim 1, which contains fine powder filler having an average particle size of 1 millimicron - 100 $\mu$.

5. An ink according to Claim 4, which contains fine powder filler having an average particle size of 0.01 $\mu$ - 50 $\mu$.

6. An ink according to Claim 5, which contains fine powder filler having an average particle size of 0.1 $\mu$ - 20 $\mu$.

7. An ink according to Claim 1, which contains fine powder filler in an amount of 0.01 - 50 wt. % based on the total weight thereof.

8. An ink according to Claim 7, which contains the fine powder filler in an amount of 5 - 20 wt. % based on the total weight thereof.

9. An ink according to Claim 1, which contains absorbent particles capable of absorbing a liquid dispersion medium.

10. An ink according to Claim 9, wherein the absorbent particles have an average particle size of 0.1 - 50 μ in their dry state, and have an average particle size of 1 - 100 μ when they absorb the liquid dispersion medium.

11. An ink according to Claim 10, wherein the absorbent particles have an average particle size of 1 - 30 μ in their dry state, and have an average particle size of 1 - 50 μ when they absorb the liquid dispersion medium.

12. An ink according to Claim 9, which contains the absorbent particles in an amount of 0.5 - 40 parts, based on their dry weight, per 100 parts of the liquid dispersion medium.

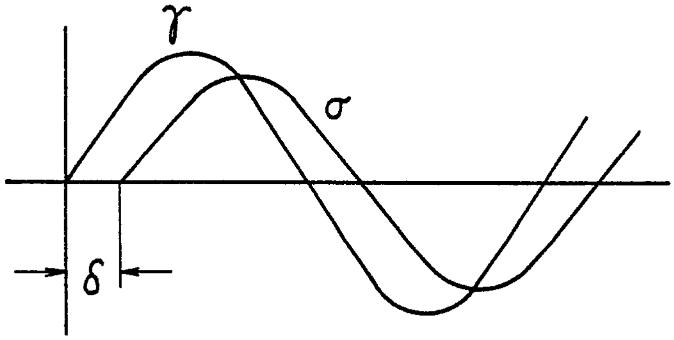


F I G. IA

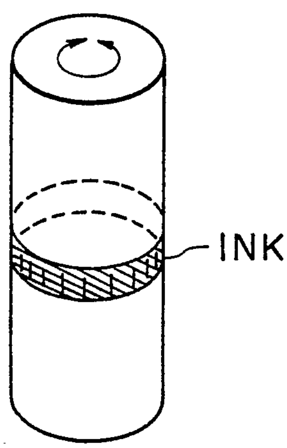


F I G. IB

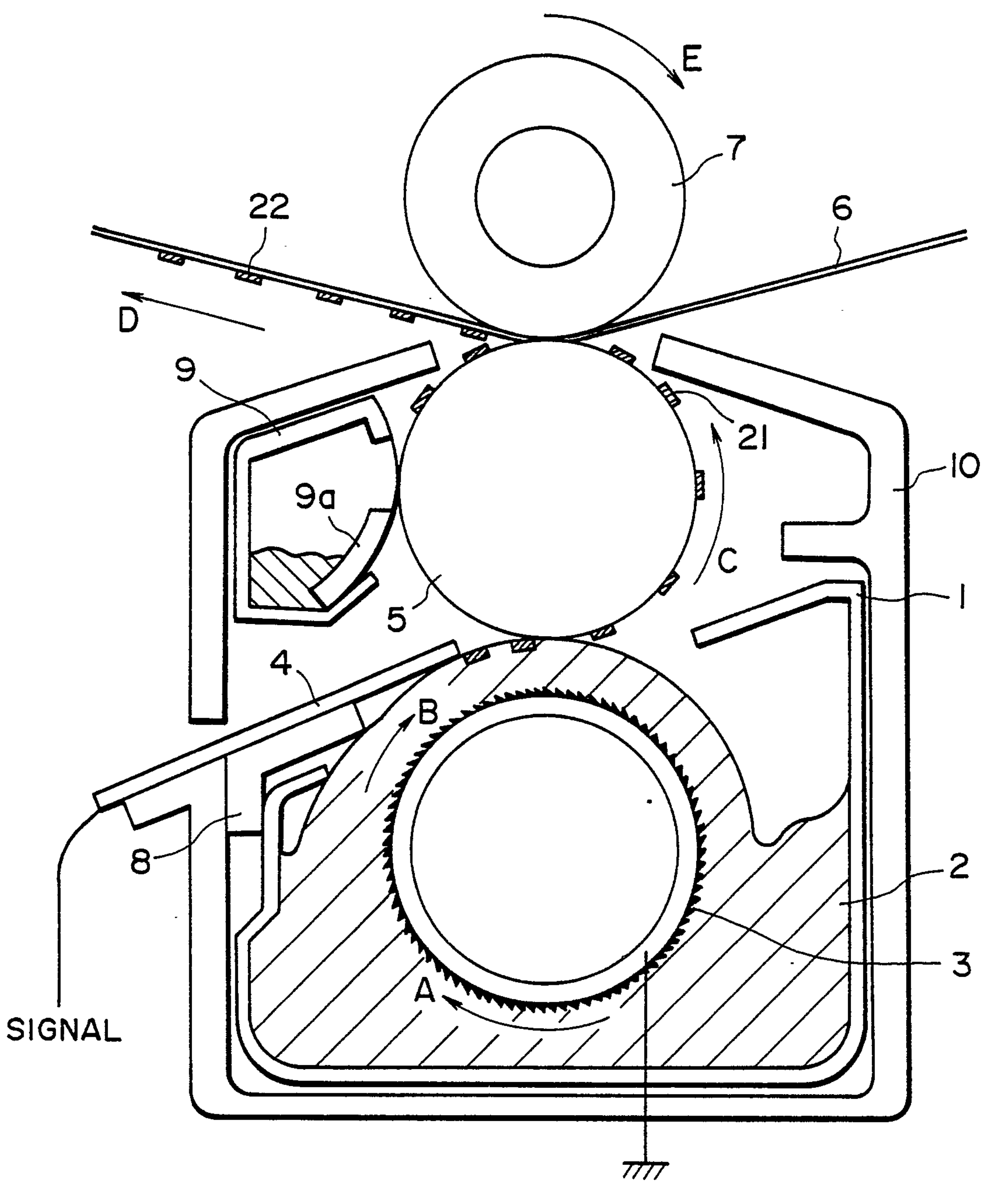


FIG. 2

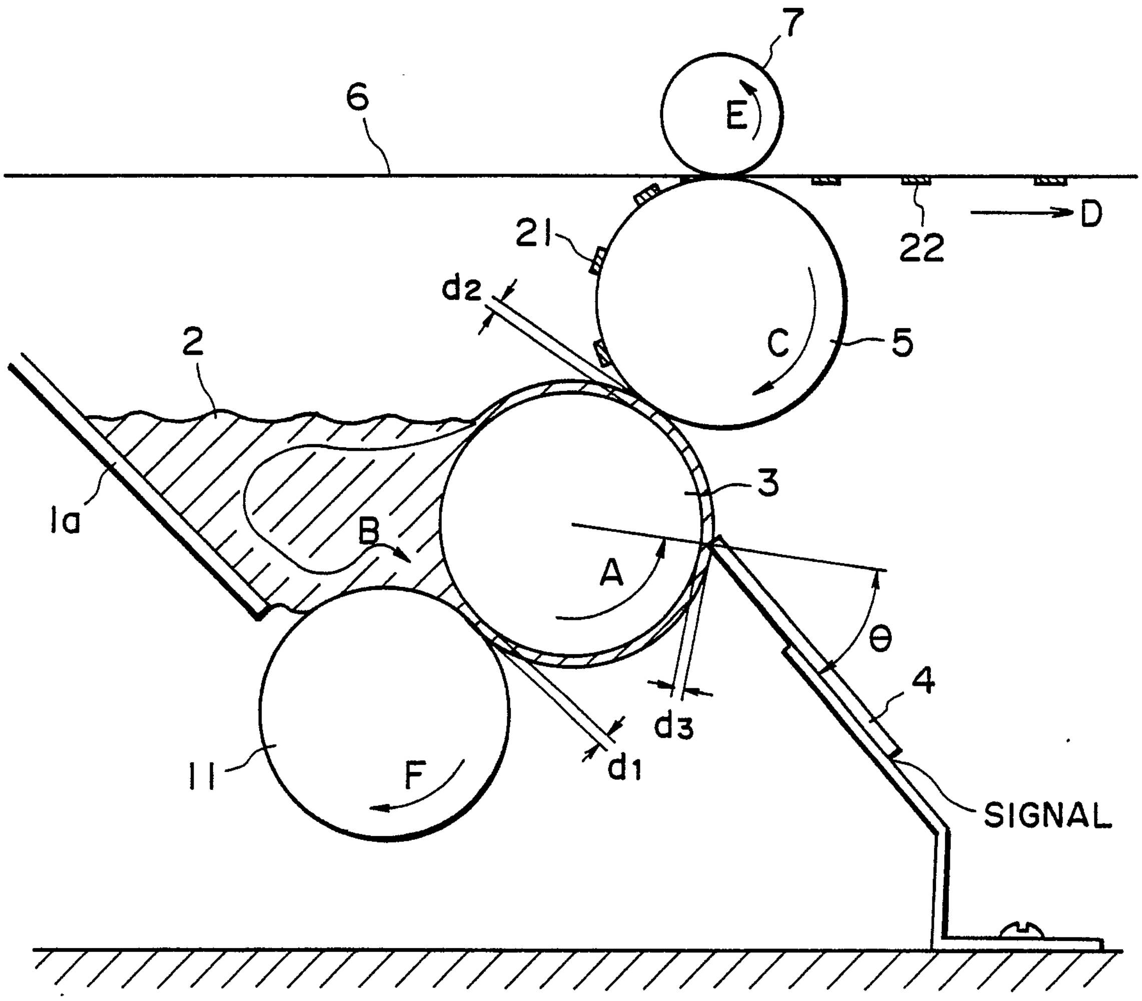


FIG. 3

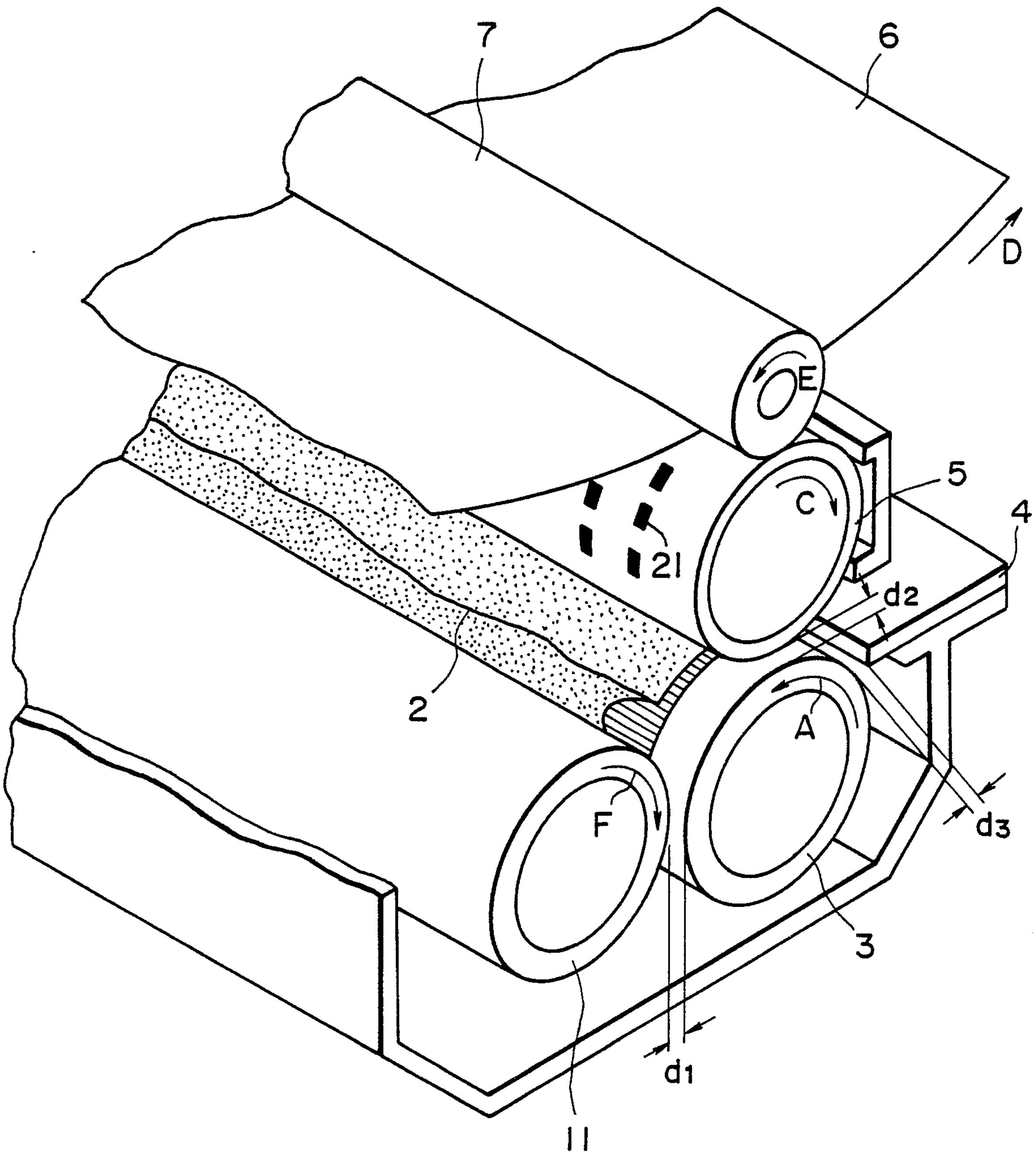


FIG. 4

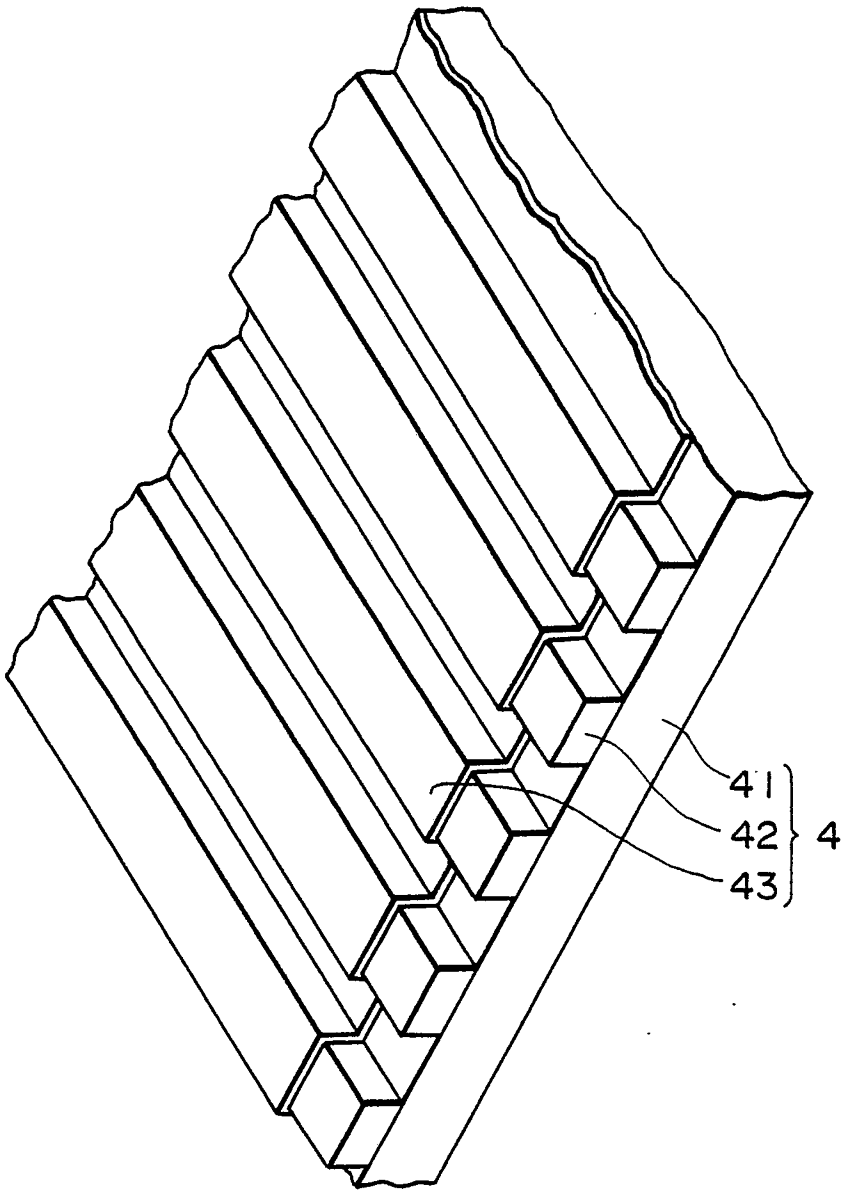


FIG. 5